# EUROPÄISCHE PATENTSCHRIFT

(11) **EP 2 828 307 B1**
(45) Veröffentlichungstag und Bekanntmachung des Hinweises auf die Patenterteilung: **09.08.2017**
(21) Anmeldenummer: 13711043.3
(22) Anmeldetag: 20.03.2013
(51) Int. Cl.: C08F 283/01, C08G 63/692, C08L 67/06

(54) **PHOSPHORHALTIGE UNGESÄTTIGTE POLYESTER, POLYESTERHARZE UND GGF. FASERVERSTÄRKTE BAUTEILE DARAUS**
PHOSPHORUS-CONTAINING UNSATURATED POLYESTERS, POLYESTER RESINS AND OPTIONALLY FIBRE-REINFORCED COMPONENTS THEREFROM
POLYESTERS INSATURÉS CONTENANT DU PHOSPHORE, RÉSINES DE POLYESTER ET ÉVENTUELLEMENT ÉLÉMENTS RENFORCÉS PAR DES FIBRES FABRIQUÉS À PARTIR DE CEUX-CI

(30) Priorität: 22.03.2012 DE 102012204642
(43) Veröffentlichungstag der Anmeldung: 28.01.2015
(73) Patentinhaber: Fraunhofer-ges. zur Förderung der Angewandten Forschung E.V., 80686 München (DE)
(72) Erfinder: STEFFEN, Sebastian, 12163 Berlin (DE); BAUER, Monika, 15712 Königs-Wusterhausen (DE)
(74) Vertreter: Strehl Schübel-Hopf & Partner
(86) Internationale Anmeldenummer: PCT/EP2013/055864
(87) Internationale Veröffentlichungsnummer: WO 2013/139877

(56) Entgegenhaltungen:
- EP-A2- 0 826 712
- DE-A1-102008 009 298
- DE-A1-102008 012 806
- US-A- 3 519 698

## Beschreibung

Die vorliegende Erfindung betrifft einen ungesättigten Polyester aus oder mit einer oder mehreren ungesättigten Dicarbonsäuren, ggf. unter Zusatz einer oder mehrerer gesättigter Dicarbonsäuren, und einer Diol-Komponente, darunter mindestens zwei unterschiedlichen phosphorhaltigen Verbindungen, die jeweils zwei freie Hydroxygruppen aufweisen oder von denen eine zwei freie Carbonsäuregruppen und die andere zwei freie Hydroxygruppen aufweist. Ein hieraus erhältliches, erfindungsgemäßes Harz besitzt eine gute Brandfestigkeit und eignet sich ausgezeichnet zur Herstellung von insbesondere faserverstärkten Bauteilen.

Ungesättigte Polyesterharze stellen eine der mengenmäßig am häufigsten eingesetzten Stoffklassen der bekannten duromeren Harzsysteme dar. Sie werden als Ausgangsmaterial für verschiedenste faserverstärkte und unverstärkte Bauteile eingesetzt. Eine große Schwäche besitzen die ungesättigten Polyester bzw. die Bauteile hieraus jedoch: sie sind leicht entflammbar und verbrennen nahezu vollständig.

Im Stand der Technik für faserverstärkte Bauteile auf Basis ungesättigter Polyesterharze wird versucht, diesem Nachteil mit vier verschiedenen Verfahren zu begegnen:
1. Verwendung von hochgefüllten Harzsystemen
   In der Regel benötigen diese Harzsysteme mindestens 300% (bezogen auf die eingesetzte Masse Harz) an Aluminiumhydroxid; hierdurch wird die Verarbeitungsfähigkeit allerdings deutlich verschlechtert. Die Verarbeitung zu den faserverstärkten Bauteilen kann in der Regel nur durch Handlaminieren erfolgen. Nahezu alle Hersteller von ungesättigten Polyestern bieten ein entsprechendes Harzsystem an.
2. Verwendung eines besonders flammgeschützten Gelcoats
   Alternativ zum hochgefüllten Harz werden Bauteile auch durch spezielle Gelcoats geschützt, die in der Regel über den Flammschutzmechanismus der Intumeszenz wirken oder besonders hochgefüllte Formulierungen sind. Häufig reicht die Flammfestigkeit der Bauteile unter Einsatz dieser Gelcoats allein nicht aus und muss durch die Verwendung der oben beschriebenen Harze ergänzt werden.
3. Halogenhaltige Harzsysteme
   Halogenhaltige Harzsysteme, die als monomere Polyesterbausteine halogenierte Verbindungen enthalten, werden nur noch in sehr geringem Umfang auf dem Markt angeboten. Auf dem deutschen Markt finden diese halogenierten Systeme quasi keine Anwendung mehr, da aus Umwelt- und Gesundheitsschutzgründen die Verwendung von halogenierten Flammschutzmitteln sehr umstritten und in manchen Anwendungen bereits verboten ist.
4. Phosphorhaltige Flammschutzadditive
   Alle bisher beschriebenen Ansätze können durch weitere Additive, vor allem durch phosphor- und stickstoffbasierte Flammschutzmittel, ergänzt werden. Auf diese Weise kann die Brandfestigkeit weiter gesteigert werden. Dies geht jedoch in der Regel mit einem Verlust an thermischer und chemischer Stabilität einher und erschwert in manchen Fällen zudem die Verarbeitbarkeit der Harzsysteme.

EP 1 370 603 A1 beschäftigt sich mit phosphorhaltigen organischen Materialien und deren Verwendung als Flammschutzmittel (Zusätze oder Materialien). Die Druckschrift beschreibt ein als "erstes Polymer" bezeichnetes Oligomer, das aus einer ungesättigten Polycarbonsäure, optional einer gesättigten Polycarbonsäure, einem Polyol und einer phosphorhaltigen Verbindung erhältlich ist, die eine P=O-Bindung und eine hydrolysestabile P-C-Bindung aufweist, ausgewählt vor allem unter Phosphinoxiden und Dihydrooxaphosphaphenanthrenoxiden, die eine P-H-Bindung aufweisen. Das Produkt enthält Hydroxy- und/oder Carboxy-Endgruppen und kann deshalb mit Acrylaten, Substanzen mit Oxiran-Ringen und/oder mit Isocyanatgruppen umgesetzt werden. In den Beispielen wurde DOPO (Schill & Seilacher) als Phosphaphenanthren-oxid eingesetzt. Die Oligomere, die durch Reaktion verschiedener Polycarbonsäuren und Polyole unter Einsatz von DOPO erhalten wurden, wurden mit Acrylat umgesetzt; die Produkte dieser Reaktion wurden auf flammverzögernde Eigenschaften hin untersucht.

In DE-OS 26 46 218 werden DOPO-Derivate zur Einarbeitung in gesättigte Polyester offenbart. Darunter ist z.B. ein DOPO-Derivat, das durch Umsetzung von DOPO mit Itaconsäure und anschließend mit Ethylenglykol hergestellt wurde und zwei freie Hydroxygruppen trägt.

Gemäß DE 2008 009 298 A1 wird ein Polyester-Flammschutzmittel durch Umsetzung von DOPO oder einem Derivat davon mit unter anderem Itaconsäure, Maleinsäure oder Fumarsäure bzw. den entsprechenden Carbonsäureanhydriden hergestellt. Eine weitere Umsetzung mit einem gesättigten zweiwertigen Alkohol und/oder einem Oxaphospholan kann folgen. In dieser Form wird das Polyester-Flammschutzmittel in die jeweilige Polyesterharz-Formulierung eingearbeitet.

Gemäß DE 10 2009 037 6 31 A1 werden DOPO, eine ungesättigte Dicarbonsäure und ein mehrwertiger Alkohol ggf. einstufig miteinander umgesetzt; das Produkt der Reaktion kann mit einer weiteren bifunktionellen Phosphorverbindung so umgesetzt werden, dass nur ca. die Hälfte aller Hydroxy-Gruppen verestert wird, so dass die nachfolgende Umsetzung mit einer ungesättigten Dicarbonsäure möglich ist.

In DE 10 1008 012 806 A1 wird das Additionsprodukt von DOPO an einer ungesättigten mehrwertigen Carbonsäure einer Polykondensation u.a. mit einem mehrwertigen Alkohol unterworfen. Der dabei entstehende Polyester dient als Flammschutzmittel für Formmassen auf der Grundlage von Polyamiden.

Kommerziell ist ein System aus einem Basisharz, einem Gelcoat und einer Lackierung der Walter Mäder AG, Kilwangen (CH) verfügbar. Dieses System besteht aus einem Komplettsystem. Wenn - und nur wenn - das Basisharz in Verbindung mit dem Gelcoat der Lackierung der Herstellerin eingesetzt wird, kann das System die in der Einführung befindliche DIN CEN/TS 45545-2 erfüllen.

Die Aufgabe der vorliegenden Erfindung liegt in der Bereitstellung von ungesättigten Polyestern sowie hieraus erhältlichen Harzen mit guten Brandfestigkeitseigenschaften, die sich sehr gut verarbeiten lassen. Außerdem soll eine deutliche Reduzierung von Füllstoffen, wie beispielsweise mineralischen Flammschutzmitteln (z.B. Aluminiumhydroxid) erreicht werden. Aus den Harzen hergestellte Bauteile sollen eine verbesserte thermische Stabilität aufweisen. Die Materialien sollen sich vorzugsweise für die Anwendung im Bereich der Schienenfahrzeuge eignen. Hierfür müssen sie die höchste Anforderung der in der Einführung befindlichen DIN CEN/TS 45545-2 erfüllen können.

Die Aufgabe der Erfindung wird gelöst durch die Bereitstellung eines ungesättigten Polyesters aus oder mit den nachfolgend in Formel (I) definierten Ausgangsmaterialien

AₓB_{y}PS_{z}CₐPA1_{b}PA2_{c} (I)

mit
A = ungesättigte Carbonsäure mit mindestens zwei Carboxyfunktionen
B = gesättigte Carbonsäure mit mindestens zwei Carboxyfunktionen
PS = ein Phosphinoxid mit einer über Kohlenstoff am Phosphor gebundenen Kohlenwasserstoffgruppe, die mindestens zwei Carbonsäuregruppen trägt,
C = Alkohol-Komponente, enthaltend eine oder mehrere Verbindungen, die mindestens zwei Hydroxygruppen aufweisen,
PA1 = ein Phosphinoxid mit zwei über Kohlenstoff am Phosphor gebundenen Kohlenwasserstoffgruppen, die jeweils mindestens eine Hydroxygruppe tragen,
PA2 = ein Phosphinoxid mit einer über Kohlenstoff am Phosphor gebundenen Kohlenwasserstoffgruppe, die mindestens zwei Hydroxygruppen trägt und zwei Substituenten, die entweder über Kohlenstoff oder über eine Sauerstoffbrücke am Phosphor gebunden sind,
x = >0 bis 1
y = 0 bis <1
z = 0 bis 0,6, vorzugsweise bis 0,5
x + y + z = 1
a = 0 bis 0,8
b = 0,1 bis 0,6, vorzugsweise bis 0,5
c = 0 bis 0,6, vorzugsweise bis 0,5
z + c = 0,1 bis 0,6, vorzugsweise bis 0,5
wobei a + b + c so gewählt sind, dass die Summe der Hydroxygruppen von C, PA1 und PA2 genau oder bis zu einer Abweichung von 50 %, vorzugsweise von 20%, stärker bevorzugt von 10% nach oben oder nach unten der Summe der Carbonsäuregruppen der Säurekomponente des ungesättigten Esters (in der Regel nur Verbindungen A plus B, gegebenenfalls aber auch in Kombination mit monofunktionellen Säuren) entspricht.

Die ungesättigte Carbonsäure A kann ausgewählt werden unter einer oder mehreren Di-, Tri-oder höherfunktionellen Carbonsäuren und/oder deren Anhydriden. Der Fachmann auf dem Gebiet der Synthese ungesättigter Polyesterharze kennt die hierfür geeigneten Ausgangsmaterialien. Besonders bevorzugt wird zumindest teilweise eine Dicarbonsäure eingesetzt, z.B. Fumarsäure, Maleinsäure oder Itaconsäure.

Die gesättigte Carbonsäure B kann ausgewählt werden unter einer oder mehreren Di-, Tri- oder höherfunktionellen Carbonsäuren und/oder deren Anhydriden. Beispiele sind Adipinsäure und deren Anhydrid. Unter dem Ausdruck "gesättigte Carbonsäure" sollen auch aromatische Säuren verstanden werden, beispielsweise Terephthalsäure, Isophthalsäure, Phthalsäure und deren Anhydride. Der Fachmann auf dem Gebiet der Synthese ungesättigter Polyesterharze kennt die hierfür geeigneten Ausgangsmaterialien.

Das Phosphinoxid PS ist charakterisiert durch das Vorhandensein eines am Phosphoratom gebundenen Kohlenwasserstoffrestes, der mit mindestens zwei Carbonsäuregruppen (und nicht notwendigerweise, aber gegebenenfalls weiteren Substituenten) substituiert ist. Die Kohlenstoffkette dieses Kohlenwasserstoffrestes kann durch Kupplungsgruppen wie C(O)O, NHC(O), C(O)NH, NHC(O)NH oder deren Schwefel-Analoga oder durch Heteroatome oder-gruppen wie O, S, NH, unterbrochen sein. Die (ggf. unterbrochene) Kohlenstoff-Kette kann eine lineare, verzweigte oder cyclische Alkylgruppe oder eine Alkenyl-, Aryl- oder Aralkylgruppen sein. Die Alkyl- oder Alkenylgruppe weist vorzugsweise 2 bis 6 Kohlenstoffatome auf. Die beiden restlichen Substituenten am Phosphoratom sind in der Regel Kohlenwasserstoffgruppen, z.B. unabhängig voneinander geradkettige, verzweigte oder cyclische Alkylgruppen mit stärker bevorzugt 2 bis 6 Kohlenstoffatomen, ggf. aber auch Alkenyl-, Aryl- oder Aralkylgruppen, die entweder direkt über ein Kohlenstoffatom oder über eine Sauerstoffbrücke an das Phosphoratom gebunden sind. Wenn einer der beiden genannten Substituenten über ein Sauerstoffatom an das Phosphoratom gebunden ist, kann die Verbindung PS auch als Phosphinsäureester angesprochen werden; wenn beide der genannten Substituenten über ein Sauerstoffatom an das Phosphoratom gebunden ist, kann die Verbindung PS auch als Phosphonsäureester angesprochen werden. In bevorzugter Weise besitzt PS ein Molekulargewicht MG im Bereich zwischen 250 und 900, oft zwischen 250 und 650. Zwei der drei Substituenten des Phosphors neben dem Oxid-Sauerstoff können ggf. miteinander verbunden sein, beispielsweise in Form einer Arylen-, Aralkylen- oder Alkylengruppe, die zweifach an das Phosphoratom gebunden ist oder (im Falle des Phosphinsäureesters) nur einseitig auf diese Weise und auf der anderen Seite über eine Sauerstoff-Brücke bzw. (im Falle des Phosphonsäureesters) beidseitig über eine Sauerstoffbrücke. Ein bekanntes Molekül, das dieser Struktur zugrunde liegt, ist 1:9,10-Dihydro-9-oxa-10-phosphaphenanthren-10-oxid (DOPO); man kann daraus durch Umsetzung einer C=C-doppelbindungshaltigen Verbindung mit dem phosphorgebundenen Wasserstoff einen entsprechenden Phosphinsäureester erhalten, der entweder bereits die erforderlichen Carbonsäuregruppen trägt oder zu der entsprechenden Verbindung umgesetzt werden kann. Wird das DOPO z.B. mit Itaconsäure umgesetzt, entsteht ein Rest mit zwei Carbonsäurefunktionen.

Fakultativ kann die Ausgangsmischung für den ungesättigten Polyester zusätzlich zu der in der Formel (I) genannten Säurekomponente auch eine oder mehrere (gesättigte und/oder ungesättigte) Monocarbonsäuren enthalten, wenn zum Beispiel ein Endgruppenverschluss erzeugt werden soll.

Die alkoholische Komponente wird ausgewählt unter Verbindungen und Verbindungsgemischen, die mindestens eine Verbindung mit mindestens zwei Hydroxygruppen aufweisen. Diole sind bevorzugt; es können aber auch tri- oder höherfunktionelle Alkohole eingesetzt werden. Hierbei kann es sich um Standard- und Spezialprodukte, wie z.B. Ethylenglykol, Propylenglykol, Neopentylglykol, Diethylenglykol, Dipropylenglykol, handeln. Besonders vorteilhaft ist der Einsatz cycloaliphatischer oder aromatenhaltiger Diole, z.B. Isosorbid, Tricyclodecan-dimethanol oder bispropoxyliertes Bisphenol A, da diese im Brandfall die Esterpyrolyse behindern. Weitere bis- und/oder tris-hydroxyfunktionelle Rohstoffe, die sich für die Polykondensationsreaktion eignen, können ebenfalls eingesetzt werden. Neben den vorgenannten Alkoholen können für einen ggf. gewünschten Endgruppenverschluss auch monofunktionelle Alkohole eingesetzt werden.

Das Phosphinoxid PA1 ist charakterisiert durch zwei Hydroxygruppen (vorzugsweise in ω-Stellung) an zwei getrennten, über Kohlenstoffatomen an das Phosphoratom gebundenen Kohlenwasserstoffgruppen. Vorzugsweise handelt es sich bei diesen Gruppen um geradkettige, verzweigte oder cyclische Alkylgruppen, stärker bevorzugt mit 2 bis 6 Kohlenstoffatomen. Stattdessen sind aber auch Alkenyl-, Aryl- oder Aralkylgruppen möglich. Der dritte Substituent des Phosphinoxids ist in der Regel ebenfalls eine über Kohlenstoff an das Phosphoratom gebundene Kohlenwasserstoffgruppe, z.B. eine geradkettige, verzweigte oder cyclische Alkylgruppe, ggf. aber auch eine Alkenyl-, Aryl- oder Aralkylgruppe. Bevorzugt handelt es sich um eine Alkylgruppe mit stärker bevorzugt 2 bis 6 Kohlenstoffatomen. Zwei der drei Kohlenwasserstoffgruppen können ggf. miteinander verbunden sein, beispielsweise eine Alkylengruppe bilden, die zweifach an das Phosphoratom gebunden ist. An den jeweiligen Kohlenwasserstoffresten können, müssen aber nicht, weitere Substituenten vorhanden sein. In bevorzugter Weise besitzt PA1 ein Molekulargewicht MG im Bereich zwischen 124 und 500, häufig von bis zu 300. Ein Beispiel für ein kommerziell verfügbares Phosphinoxid PA1 ist Bis-(3-hydroxypropyl)isobutylphosphinoxid. Es können auch Mischungen unterschiedlicher Phosphinoxide eingesetzt werden, die der obigen Definition genügen.

Das Phosphinoxid PA2 ist charakterisiert durch das Vorhandensein eines am Phosphoratom gebundenen Kohlenwasserstoffrestes, der mit mindestens zwei Hydroxygruppen (und nicht notwendigerweise, aber gegebenenfalls weiteren Substituenten) substituiert ist. Im Übrigen kann es eine hohe strukturelle Ähnlichkeit zum säuregruppenhaltigen Phosphinoxid PS aufweisen. So kann die Kohlenstoffkette dieses Kohlenwasserstoffrestes durch Kupplungsgruppen wie C(O)O, NHC(O), C(O)NH, NHC(O)NH oder deren Schwefel-Analoga oder durch Heteroatome oder -gruppen wie O, S, NH unterbrochen sein. Die (ggf. unterbrochene) Kohlenstoff-Kette kann eine lineare, verzweigte oder cyclische Alkylgruppe oder eine Alkenyl-, Aryl- oder Aralkylgruppe sein. Die Alkyl- oder Alkenylgruppe weist vorzugsweise 2 bis 6 Kohlenstoffatome auf. Die beiden restlichen Substituenten am Phosphoratom sind in der Regel Kohlenwasserstoffgruppen, z.B. unabhängig voneinander geradkettige, verzweigte oder cyclische Alkylgruppen mit stärker bevorzugt 2 bis 6 Kohlenstoffatomen, ggf. aber auch Alkenyl-, Aryl- oder Aralkylgruppen, die entweder direkt über ein Kohlenstoffatom oder über eine Sauerstoffbrücke an das Phosphoratom gebunden sind. Wenn einer der beiden genannten Substituenten über ein Sauerstoffatom an das Phosphoratom gebunden ist, kann die Verbindung PA2 auch als Phosphinsäureester angesprochen werden; wenn beide der genannten Substituenten über ein Sauerstoffatom an das Phosphoratom gebunden ist, kann die Verbindung PA2 auch als Phosphonsäureester angesprochen werden. In bevorzugter Weise besitzt PA2 ein Molekulargewicht MG im Bereich zwischen 300 und 900, oft zwischen 300 und 700. Zwei der drei Substituenten des Phosphors neben dem Oxid-Sauerstoff können ggf. miteinander verbunden sein, beispielsweise in Form einer Arylen-, Aralkylen- oder Alkylengruppe, die zweifach an das Phosphoratom gebunden ist, oder (im Falle des Phosphin- bzw. Phosphonsäureesters) nur einseitig auf diese Weise und auf der anderen Seite über eine Sauerstoff-Brücke bzw. beidseitig über eine Sauerstoffbrücke. Das bedeutet, dass wiederum das bekannte Molekül 1:9,10-Dihydro-9-oxa-10-phosphaphenantren-10-oxid (DOPO) dieser Struktur zugrunde liegen kann, woraus man durch Umsetzung einer C=C-doppelbindungshaltigen Verbindung mit dem phosphorgebundenen Wasserstoff einen entsprechenden Phosphinsäureester erhalten kann, der entweder bereits die erforderlichen Hydroxygruppen trägt oder zu der entsprechenden Verbindung umgesetzt werden kann. Beispielsweise kann das oben für PS beschriebene Produkt der Umsetzung von DOPO mit Itaconsäure mit einem Diol in die entsprechende Dihydroxyverbindung überführt werden, wobei 3-(1:9,10-Dihydro-9-oxa-10-phosphaphenantren-10-oxid)propandicarbonsäure-bisethylenglykolester entsteht; diese Umsetzung kann selbstverständlich auch mit anderen Di- oder mehrfunktionellen Diolen erfolgen wie z.B. Triethylenglykol, Diethylenglykol oder einer anderen Verbindung der unter C in Formel (A) genannten Diol- oder höherfunktionellen Alkohol-Komponente. 3-(1:9,10-Dihydro-9-oxa-10-phosphaphenanthren-10-oxid)propandicarbonsäure-bistriethylenglykolester ist als Produkt der Fa. Schill & Seilacher "Struktol", XP3700, im Handel erhältlich.

Alle vorgenannten Kohlenwasserstoffreste bzw. -gruppen an PS, PA1 und PA2 können, müssen aber nicht, neben den genannten Carbonsäure- bzw. Hydroxygruppen weitere Substituenten tragen.

Die Summe von x + y + z soll 1 ergeben, wobei der Anteil an B, definiert über y, zwischen 0 und <1, vorzugsweise zwischen 0 und 0,7 und dabei besonders bevorzugt nicht über 0,5 liegt. In vielen Ausführungsformen fehlt eine Verbindung B ganz oder ist nur in einem Anteil von wenigen % vorhanden, d.h. y liegt in diesen Fällen zwischen 0 und 0,2, vorzugsweise zwischen 0 und 0,1.

Die Summe a + b + c muss so gewählt werden, dass die Summe der Hydroxygruppen von C, PA1 und PA2 genau oder bis zu einer Abweichung von 50 % nach oben oder nach unten der Summe der Carbonsäuregruppen der Säurekomponente des ungesättigten Esters (in der Regel nur Verbindungen A plus ggf. B plus ggf. PS, optional aber auch in Kombination mit monofunktionellen Säuren) entspricht. Werden ausschließlich Dicarbonsäuren eingesetzt, muss demnach a + b + c dann 1 ergeben, wenn die Komponenten C, PA1 und PA2 jeweils zwei Hydroxygruppen aufweisen. Dabei kann dann, wenn hohe Anteile an PA1 und PA2 verwendet werden, ggf. auf den Zusatz von C ganz verzichtet werden, weshalb a auch 0 sein kann. Da PA1 und PA2 in der Regel jeweils zwei Hydroxygruppen aufweisen, sollte in diesen Fällen b + c = zwischen 0,5 und 1,5 und vorzugsweise etwa 1 sein, wenn für A und ggf. B und ggf. PS jeweils Dicarbonsäuren und wenn keine weiteren monovalenten Säuren eingesetzt werden.

PS und PA2 sind untereinander austauschbar. Das bedeutet, dass es auf das Mengenverhältnis von PS und PA2 nicht ankommt, wenn nur die Summe von z und c einen Wert von 0,1 bis 0,6, vorzugsweise von bis zu 0,5 annimmt. Es sei jedoch auf eine bevorzugte Ausführungsform verwiesen, in der z = 0 ist.

Für die Zwecke des später gewünschten Flammschutzes ist es bevorzugt, die Mengenverhältnisse von a : b : (c + z) so zu wählen, dass der Phosphorgehalt des gebildeten Polyesters mindestens bei 3 Masse-% liegt. Bevorzugt liegt der Phosphorgehalt im Bereich von etwa 4,5 bis 7 Masse-% oder mehr. Ein ausreichender bzw. hoher Phosphorgehalt des Harzes ist entscheidend für die Brandfestigkeit der Bauteile, weshalb der Gehalt nach oben nur durch verfahrenstechnische Parameter und durch die Phosphorgehalte der Edukte begrenzt ist.

Wie bei der Herstellung von ungesättigten Polyestern üblich, wird den zu veresternden Ausgangsmaterialien in der Regel ein Inhibitor zum Schutz der Doppelbindungen während der Polykondensation zugegeben, beispielsweise Hydrochinon.

Aus den obigen Komponenten wird in üblicher Weise ein ungesättigter Polyester hergestellt, beispielsweise durch Vermischen der Ausgangsmaterialien und nachfolgender z.B. thermisch herbeigeführter Polykondensation, wobei das Gleichgewicht der Reaktion in bekannter Weise, z.B. durch Abdestillieren des entstehenden Wassers, zur Produktseite hin verschoben wird. Die Erfinder konnten feststellen, dass sich der Zusatz einer Kombination aus den phosphorhaltigen Verbindungen PA1 und PA2 vorteilhaft auf die Reaktionsbedingungen bei der Herstellung des Polyesters auswirkt und außerdem später die Eigenschaften des aus dem Polyester hergestellten Duromeren positiv beeinflusst. Dies gilt ebenfalls für den Fall, dass PA2 ganz oder teilweise durch PS ersetzt ist. Wird nämlich nur das Phosphinoxid PA1 in einer Menge eingesetzt, die zum gewünschten Phosphor-Gehalt des Polyesters führt, steigt die Viskosität der Schmelze während der Polykondensation auf ein intolerables Maß an. Werden dagegen nur das Phosphinoxid PA2 und/oder PS verwendet, sinkt die Schmelzviskosität zwar sehr stark ab; überraschenderweise ist jedoch die Glasübergangstemperatur eines mit diesem Polyester erzeugten Duromeren trotz und auch bei vergleichbarem Phosphorgehalt deutlich zu niedrig. Erst die Kombination beider Phosphinoxide führt zu dem erfindungsgemäßen, vorteilhaften Ergebnis. Ohne auf eine Interpretation der Ursache dieser Eigenschaften festgelegt werden zu wollen, vermuten die Erfinder, dass dies mit der Tatsache zusammenhängt, dass der Phosphor von PA1 in die Polymerkette eingebunden wird, während er sich in PA2 bzw. PS an einer Seitenkette befindet.

Dem Polyester kann sodann entweder in der Schmelze oder kalt, d.h. in erstarrtem Zustand, ein copolymerisierbares Mono- oder Oligomer zugegeben werden, beispielsweise Styrol, Methylmethacrylat oder eine andere C=C-doppelbindungshaltige Verbindung. Von Vorteil ist der Zusatz von mindestens 5, vorzugsweise zwischen etwa 10 und 20 Masse-% Methylmethacrylat zu einem anderen copolymerisierbaren Mono- oder Oligomer wie Styrol, weil diese Substanz die Viskosität der Mischung senkt, was für die Herstellung von Vorteil ist, und darüber hinaus als Rauchgasunterdrücker fungiert. Durch Vermischen in der Schmelze, Schütteln oder andere vergleichbare Maßnahmen entsteht eine homogene Mischung. Werden dieser Mischung Initiator (z.B. Methylethylketonperoxid) und, falls technisch erforderlich oder günstig, Beschleuniger (z.B. eine Cobalt-Verbindung, wenn zum Beispiel eine Härtung bei Raumtemperatur gefordert ist) zugesetzt, wie aus dem Stand der Technik bekannt, entsteht ein Reaktivharz, das in eine geeignete Form gebracht und durch Lagerung bei Raumtemperatur, ggf. auch bei erhöhter Temperatur, oder strahlenchemisch gehärtet werden kann.

Das erfindungsgemäße Reaktivharz kann ungefüllt oder mit einem oder mehreren Füllstoffen gefüllt zum Einsatz kommen. Die Füllstoffe werden je nach Art des Einsatzzweckes gewählt; um besonders hohe Brandschutzeigenschaften zu erhalten, kann beispielsweise ein anorganischer oder mineralischer Füllstoff wie Aluminiumtrihydroxid (ATH) zugesetzt werden, wie aus dem Stand der Technik bekannt. Der Gehalt des Flammschutzmittels kann je nach Höhe der Brandschutzanforderungen gewählt werden; günstig sind Mengen zwischen 25 und 300 Masse-%, bezogen auf die Masse des eingesetzten Reaktivharzes, bevorzugt sind Mengen zwischen 50 und 200 Masse-%, stärker bevorzugt sind Mengen zwischen 75 und 170 Masse-%, und ganz besonders bevorzugt sind Mengen zwischen 90 und 160 Masse-%.

Das erfindungsgemäße Reaktivharz kann als solches für die Herstellung von Formkörpern eingesetzt werden. Ein wichtiges Einsatzgebiet liegt in der Herstellung mit Fasern durchsetzter, insbesondere faserverstärkter Bauteile; hierfür kann es - gefüllt oder ungefüllt - als Beschichtungs- oder Imprägnierharz verwendet werden. Dabei kommen prinzipiell alle Arten von Fasern in Betracht wie z.B. Glas-, Kohle-, Natur-, Mineral- (z.B. Basalt-), Metall- und Aramidfasern und thermoplastische und keramische Fasern, sowie beliebige Mischungen dieser Fasern, worunter Glasfasern, Kohlefasern und Naturfasern und deren Mischungen besonders günstig sind. Die Art der Bindung der Fasern untereinander ist dabei nachrangig; beispielsweise können Fasergelege verwendet werden.

In einer spezifischen Ausführungsform der Erfindung werden die Formkörper mit Hilfe von imprägnierten Fasermatten (z.B. aus einem Fasergelege) hergestellt, die einzeln oder als Verbund aus mehreren solchen Matten schichtförmig in eine Negativform eingebracht und darin gehärtet werden. Bei Bedarf können beliebige, kommerziell verfügbare, ggf. auch flammfest ausgerüstete Gelcoats oder Standardgelcoats eingesetzt werden, die zur Erzeugung einer spezifischen Oberfläche des späteren Bauteils zwischen der Oberfläche der Form und der Schicht aus dem erfindungsgemäßen Material angeordnet werden. Natürlich sind die Eigenschaften der Gelcoats hinsichtlich ihrer Auswirkung auf die Brandfestigkeit der so erhaltenen Bau- bzw. Formteile jeweils zu berücksichtigen und deren entsprechende Eigenschaften ggf. durch Anpassung der Brandschutzeigenschaften der erfindungsgemäßen Fasermatten zu korrigieren.

Die Erfindung wird nachstehend anhand von Herstellungsvorschriften und Ausführungsbeispielen näher erläutert.

### 1. Herstellung einer Harzlösung

Die Harzlösung kann heiß, d.h. in Schmelze des Polyesters oder kalt d.h. im erstarrtem Zustand durch Zugabe von Styrol, Methylmethacrylat, oder anderen geeigneten Mono- oder Dimeren hergestellt werden. Eine besonders geeignete Mischung, die zur Vergleichbarkeit der nachstehenden Beispiele gleichbleibend eingesetzt wurde, besteht aus den nachfolgenden Komponenten bzw. weist diese auf:
- einen ungesättigten Polyester aus einer Zusammensetzung gemäß Formel (I), vorzugsweise in einer Menge von 25 bis 75 Masse-%, stärker bevorzugt von 30 bis 50 Masse-% und insbesondere von etwa 40 Masse-%, bezogen auf die Mischung,
- eine C=C-doppelbindungshaltige, unter C-C-Kettenverlängerung copolymerisierbare Verbindung, die vorzugsweise eine Allyl- oder Vinylgruppe trägt. Bevorzugt ist Styrol. Die Verbindung wird vorzugsweise in einer Menge von 25-75 Masse-%, stärker bevorzugt von 40 bis 60 Masse-% und insbesondere von etwa 50 Masse-% eingesetzt, bezogen auf die Mischung,
- einen einpolymerisierbaren Viskositätssenker und vorzugsweise Rauchgasunterdrücker für das spätere Duromer. Bevorzugt ist Methylmethacrylat. Der Viskositätssenker wird vorzugsweise in einer Menge von 0 bis 20 Masse-%, stärker bevorzugt von mindestens 5 Masse-% und insbesondere von etwa 10 Masse-% eingesetzt, bezogen auf die Mischung,
- bei Bedarf eine geringe Menge (bis zu ca. 5 Masse-%, vorzugsweise bis zu ca. 2 Masse-%) eines einpolymerisierbaren Kompatibilitätsverbesserers. Dieser weist eine C=C-Doppelbindung, vorzugsweise eine Allyl- oder Vinylgruppe auf, die nur radikalisch einbaubar ist, und besonders bevorzugt zusätzlich eine Phosphin- oder Phosphonsäure-oder Phosphin- oder Phosphonester-Gruppe. Ein günstiges Beispiel hierfür ist Vinylphosphonsäuredimethylester. Der Bedarf kann entstehen, wenn die Polarität des gebildeten Polyesters durch den Einbau der Phosphinoxide so verschoben wurde, dass die Kompatibilität von ungesättigtem Ester und der Mischung aus C=C-doppelbindungshaltiger Verbindung und einpolymerisierbarem Viskositätssenker nicht mehr gewährleistet ist. Die kompatibilitätsverbessernde Gruppe (die das Phosphoratom enthaltende Gruppe) verbessert die Verträglichkeit mit dem phosphinoxidhaltigen Ester; gleichzeitig wirkt die Verbindung als reaktives Additiv, das in der Regel erst beim Vernetzen des Polyesters einpolymerisiert wird.

### 2. Herstellung der Härtungsmischung

Durch Zugabe eines Initiators (Peroxid) und gegebenenfalls eines Beschleunigers (Co-Lösung) kann die Harzlösung thermisch (einschließlich Raumtemperatur) oder strahlenchemisch gehärtet werden. Durch Zugabe eines anorganischen, vorzugsweise mineralischen Füllstoffs wie Aluminiumhydroxid wird die Flammfestigkeit weiter gesteigert. Eine Faserverstärkung durch z.B. Glasfasern ist möglich. Eine Besonderheit ist die Erreichung der Vorgaben aus der Vornorm DIN CEN/TS 45545-2 für Schienenfahrzeuge bzgl. der Flammfestigkeit und die einfache Verarbeitung der Harzmischungen und eine gute Tränkung der Glasfasern.

### Beispiele

### Beispiel 1:

Ein ungesättigter Polyester wurde in einer Polykondensationsreaktion hergestellt. In einen 2 Liter Vier-Hals-Rundkolben wurden 3,1 mol Fumarsäure, 1,24 mol Neopentylglykol, 0,93 mol Bis-(3-hydroxypropyl)-isobutylphosphinoxid und 0,93 mol 3-(1:9,10-Dihydro-9-oxa-10-phosphaphenanthren-10-oxid)-1,2-propandicarbonsäure-bis-triethylenglykolester und 150 ppm Hydrochinon eingewogen und thermisch einer Polykondensationsreaktion unterzogen. Die Reaktion erfolgte unter Ausschluss von Luftsauerstoff. Das entstehende Reaktionswasser wurde mittels Destillation abgetrennt. Die Polykondensation wurde bis zu einer Säurezahl von 30,2 mg KOH/g geführt. Bei Reaktionsende wurde eine Schmelzviskosität von 1570 mPa*s (150°C und 6000 1/s) bestimmt. Der Phosphorgehalt des ungesättigten Polyesters betrug 4,8 Masse-%.

Aus dem kondensierten ungesättigten Polyester wurde im Labormaßstab eine Reaktivharzlösung hergestellt. Hierzu wurde der ungesättigte Polyester in eine 1 Liter Braunglasflasche gefüllt und kalt (bei Raumtemperatur) unter permanenter Durchmischung (Rollen- oder Schütteltisch) in 50 m-% Styrol und 10 m-% Methylmethacrylat (als Viskositätssenker und Rauchgasunterdrücker) gelöst.

### Beispiel 2:

Ein ungesättigter Polyester wurde aus 1,5 mol Fumarsäure, 0,60 mol Isosorbid, 0,45 mol Bis-(3-hydroxypropyl)-isobutylphosphinoxid und 0,45 mol 3-(1:9,10-Dihydro-9-oxa-10-phosphaphenanthren-10-oxid)-1,2-propandicarbonsäure-bis-triethylenglykolester und 150 ppm Hydrochinon hergestellt. Die Polykondensation wurde bis zu einer Säurezahl von 28,5 mg KOH/g geführt. Bei Reaktionsende wurde eine Schmelzviskosität von 3527 mPa*s (150°C und 2507 1/s) bestimmt. Der Phosphorgehalt des ungesättigten Polyesters betrug in diesem Fall ebenfalls 4,8 Masse-%.

Aus dem kondensierten ungesättigten Polyester wurde im Labormaßstab eine Reaktivharzlösung hergestellt. Hierzu wurde der ungesättigte Polyester in eine 1 Liter Braunglasflasche gefüllt und kalt (bei Raumtemperatur) unter permanenter Durchmischung (Rollen- oder Schütteltisch) in 50 m-% Styrol und 10 m-% Methylmethacrylat (als Viskositätssenker und Rauchgasunterdrücker) gelöst.

### Beispiel 3:

Ein ungesättigter Polyester wurde aus 2,2 mol Fumarsäure, 0,65 mol Isosorbid, 0,22 mol Tricyclodecandimethanol, 0,65 mol Bis-(3-hydroxypropyl)-isobutylphosphinoxid und 0,65 mol 3-(1:9,10-Dihydro-9-oxa-10-phosphaphenanthren-10-oxid)-1,2-propandicarbonsäure-bis-triethylenglykolester und 150 ppm Hydrochinon hergestellt. Die Polykondensation wurde bis zu einer Säurezahl von 32 mg KOH/g geführt. Bei Reaktionsende wurde eine Schmelzviskosität von 2418 mPa*s (150°C und 4000 1/s) bestimmt. Der Phosphorgehalt des ungesättigten Polyesters betrug in diesem Fall 4,6 Masse-%.

Aus dem kondensierten ungesättigten Polyester wurde im Labormaßstab eine Reaktivharzlösung hergestellt. Hierzu wurde der ungesättigte Polyester in eine 1 Liter Braunglasflasche gefüllt und kalt (bei Raumtemperatur) unter permanenter Durchmischung (Rollen- oder Schütteltisch) in 50 m-% Styrol und 10 m-% Methylmethacrylat (als Viskositätssenker und Rauchgasunterdrücker) gelöst

### Vergleichsbeispiel 1:

Ein ungesättigter Polyester wurde aus 4,595 mol Fumarsäure, 1,15 mol 1,2-Propandiol, 1,15 mol Hydroxypivalinsäureneopentylglykol, 2,3 mol Bis-(3-hydroxypropyl)-isobutylphosphinoxid und 150 ppm Hydrochinon hergestellt. Die Polykondensation wurde bis zu einer Säurezahl von 47,8 mg KOH/g geführt. Bei Reaktionsende wurde eine Schmelzviskosität von 9990 mPa*s (150°C und 100 1/s) bestimmt. Der Phosphorgehalt des ungesättigten Polyesters betrug in diesem Fall 5,9 Masse-%.

Aus dem kondensierten ungesättigten Polyester wurde im Labormaßstab eine Reaktivharzlösung hergestellt. Hierzu wurde der ungesättigte Polyester in eine 1 Liter Braunglasflasche gefüllt und kalt (bei Raumtemperatur) unter permanenter Durchmischung (Rollen- oder Schütteltisch) in 50 m-% Styrol und 10 m-% Methylmethacrylat (als Viskositätssenker und Rauchgasunterdrücker) gelöst.

### Vergleichsbeispiel 2:

Ein ungesättigter Polyester wurde aus 2,98 mol Fumarsäure, 0,53 mol 1,2-Propandiol, 0,53 mol Neopentylglykol und 1,925 mol 3-(1:9,10-Dihydro-9-oxa-10-phosphaphenantren-10-oxid)-1,2-propandicarbonsäure-bis-triethylenglykolester und 150 ppm Hydrochinon hergestellt. Die Polykondensation wurde bis zu einer Säurezahl von 19,1 mg KOH/g geführt. Bei Reaktionsende wurde eine Schmelzviskosität von 526 mPa*s (150°C und 10000 1/s) bestimmt. Der Phosphorgehalt des ungesättigten Polyesters betrug in diesem Fall wiederum 4,6 Masse-%.

Aus dem kondensierten ungesättigten Polyester wurde im Labormaßstab eine Reaktivharzlösung hergestellt. Hierzu wurde der ungesättigte Polyester in eine 1 Liter Braunglasflasche gefüllt und kalt (bei Raumtemperatur) unter permanenter Durchmischung (Rollen- oder Schütteltisch) in 50 m-% Styrol und 10 m-% Methylmethacrylat (als Viskositätssenker und Rauchgasunterdrücker) gelöst.

### Beispiel 4 Herstellung einer gefüllten Imprägnierlösung:

Aus den Reaktivharzlösungen aus Beispiel 1 bis 3 sowie den Vergleichsbeispielen wurden gefüllte Imprägnierlösungen hergestellt. Hierzu wurde 100 g Reaktivharz in einen Mischbecher eingewogen. Als mineralisches Flammschutzmittel wurde dem Reaktivharz eine festgelegte Menge Aluminiumtrihydroxid (ATH, z.B. Martinal ON 921 oder Martinal 908 (beide Martinswerk)) zugeben. Der Gehalt des mineralischen Flammschutzmittels variierte zwischen 100 und 200 Masse-% bezogen auf die eingesetzte Reaktivharzmenge. Hierdurch konnte die Brandfestigkeit der späteren Laminate eingestellt werden. Für die weitere Charakterisierung wurden Imprägnierlösungen mit 100, 150 und 200 m-% ATH eingesetzt. Das ATH wurde mittels Dispergierscheibe 5 Minuten lang in die Reaktivharzlösung eingearbeitet, so dass eine vollständige Benetzung der Partikel erfolgen konnte. Zur besseren Verarbeitbarkeit konnten, wenn erforderlich, wenige Prozent an kommerziellen Prozessadditiven (Dispergier- und Benetzungsadditive der Fa. BYK z.B. BYK W 980) eingesetzt werden, die idealer Weise vor der Zugabe des ATHs eingerührt wurden.

Zur späteren Härtung der Laminate wurde der Imprägnierlösung (Reaktivharz plus ATH) 1,5 Masse-% Cobaltbeschleuniger (Pergaquick C11) bezogen auf 100 g Reaktivharz hinzugegeben und mittels Dispergierer homogenisiert. Als Härtungsinitiator wurden 3 Masse-% (bezogen auf 100 g Reaktivharz) Methylethylketonperoxid (Peroxan ME 50-L) hinzugegeben und kurz mittels Dispergierer homogenisiert. Die Vermischung erfolgt üblicherweise bei Raumtemperatur. Die Reihenfolge ist zwingend einzuhalten, um eine Beeinträchtigung des Härtungsverhaltens zu vermeiden.

Da durch den Einsatz der phosphorhaltigen Bausteine im Polyester die Polarität der Harze mit dem Reaktivverdünner (Styrol plus Methylmethacrylat) verschoben wurde, wurde zum Teil 2 Masse-% Vinylphosphonsäuredimethylester als kompatibilisierendes und gleichzeitig reaktives Additiv zugegeben und kurz homogenisiert.

Bei der Homogenisierung der einzelnen Bestandteile der Imprägnierlösung wurde stets die Drehzahl so gewählt, dass möglichst keine Erwärmung der Imprägnierlösung auftrat, um die Topfzeit der Imprägnierlösung nicht zu verkürzen.

### Beispiel 5 Herstellung der Laminate:

Im Handlaminierverfahren wurde die nach Beispiel 4 hergestellte Imprägnierlösung schichtweise auf einen Glasgelegekomplex (Fa. Saertex 600 g/m² 0°/90°-Glasgelege mit 219 g/m² aufgenähter Wirrglasmatte) aufgetragen und mittels Entlüftungswalzen verteilt und entlüftet. Dies gelang mit den Reaktivharzlösungen aus den Beispielen 1 bis 3 und dem Vergleichsbeispiel 2 ohne Probleme, während die Lösung des Vergleichsbeispiels 1 so zäh war, dass sie nur unter erheblichem Aufwand in den Glasgelegekomplex hineingedrückt werden konnte. Der Glasgelegekomplex wurde so aufgelegt, dass die Wirrglasmatte nach unten zeigte. Auf das so getränkte bzw. im Falle von Vergleichsbeispiel 1 unter Kraftanwendung bestrichene erste Glasgelege wurde ein weiteres Glasgelege aufgelegt und auf analoge Weise mit der Imprägnierlösung getränkt bzw. bestrichen. Dieses Verfahren wurde weitergeführt, bis ein fünfschichtiger Aufbau erreicht war.

Der getränkte bzw. bestrichene Laminataufbau wurde zur Härtung 24 Stunden bei 25 °C gelagert. Zur Erhöhung der mechanischen und thermischen Eigenschaften wurde nach Ablauf der 24 Stunden eine Nachhärtung in einem Trockenschrank durchgeführt. Hierzu wurde das Laminat eine Stunde bei 80°C und 2 Stunden bei 120 °C gelagert.

Zur weiteren Charakterisierung wurde das Laminat mittels Tischkreissäge auf die erforderliche Probengröße zugeschnitten.

Aus den Imprägnierlösungen nach Beispiel 4 wurden folgende Laminate hergestellt:

**Tabelle 1:**

| Laminat-Nr. | Reaktivharzlösung nach | Kompatibilisierungsadditiv | Gehalt an mineralischem Flammschutzmittel |
|---|---|---|---|
| 1 | Beispiel 1 | - | 150 Teile |
| 2 | Beispiel 1 | - | 200 Teile |
| 3 | Beispiel 2 | 1 m-% | 100 Teile |
| 4 | Beispiel 2 | 2 m-% | 150 Teile |
| 5 | Beispiel 3 | - | 150 Teile |
| 6 | Beispiel 3 | - | 200 Teile |
| 7 | Vergleichsbeispiel 1 | | 150 Teile |
| 8 | Vergleichsbeispiel 1 | | 200 Teile |
| 9 | Vergleichsbeispiel 2 | | 200 Teile |

Beispiel 6 Bestimmung der Brandfestigkeit und der Glasübergangstemperatur der faserverstärkten Laminate:
Mittels eines Cone-Kalorimeters (Fa. Fire Testing Technology, 2002) wurde bei einer Wärmeeinstrahlung von 50 kW/m² die Brandfestigkeit der Proben bestimmt. Die Probengröße der gemessenen Probekörper ist 100x100 mm² (entspricht einer Bestrahlungsfläche von 88,4 cm²). Die Charakterisierung erfolgte in Anlehnung an die vorgegebenen Verfahrensweisen nach ISO 5660-1 und -2. Es wurden jeweils 2 Probekörper gemessen. In der Tabelle sind die jeweils "schlechteren" Messungen angegeben.

**Tabelle 2:**

| | **Masse [g]** | **TTI [s]** | **HRRₚₑₐₖ [kW/m²]** | **MARHE [kW/m²]** | **THR [MJ/m²]** | **TSR [m²/m²]** | **CR [%]** |
|---|---|---|---|---|---|---|---|
| Laminat 1 | 105 | 111 | 163 | 91 | 88 | 1320 | 66 |
| Laminat 2 | 145 | 155 | 100 | 45 | 71 | 870 | 65 |
| Laminat 3 | 118 | 82 | 138 | 78 | 84 | 2000 | 62 |
| Laminat 4 | 147 | 152 | 134 | 55 | 81 | 1730 | 64 |
| Laminat 5 | 134 | 113 | 140 | 63 | 96 | 1850 | 64 |
| Laminat 6 | 196 | 161 | 103 | 43 | 123 | 1230 | 61 |
| Laminat 7 | 116 | 120 | 137 | 82 | 100 | 1673 | 64 |
| Laminat 8 | 145 | 165 | 90 | 37 | 50 | 1644 | 67 |
| Laminat 9 | 94 | 134 | 151 | 67 | 51 | 1141 | 67 |

| | | | | | | | |
|---|---|---|---|---|---|---|---|
| Legende: **TTI:** Time To Ignition (Entzündungszeit) **HRRₚₑₐₖ**: Peak of Heat Release Rate (Maximalwert der Wärmefreisetzungsrate) **MAHRE:** Maximum of Average Rate of Heat Emission (Maximum der mittleren Wärmefreisetzungsrate) **THR:** Total Heat Release (gesamtfreigesetzte Wärme) **TSR:** Total Smoke Release (gesamtfreigesetzter Rauch) **CR:** Char Residue (Verbrennungsrückstand) | | | | | | | |

Zur Bestimmung der Glasübergangstemperatur wurden von den Laminaten Probekörper mit den Maßen 45x6x3 mm³ (LxBxH) zugeschnitten und mittels dynamisch-mechanischer Analyse RSA3 (Fa. PA Instruments) bei einer Frequenz von 1 Hz bestimmt. Als Maß für die Glasübergangstemperatur wurde das Maximum des Verlustfaktors herangezogen.

**Tabelle 3:**

| | **Glasübergangstemperatur bei 1 Hz [°C]** |
|---|---|
| Laminat 1 | 110 |
| Laminat 2 | 110 |
| Laminat 3 | 120 |
| Laminat 4 | 120 |
| Laminat 5 | 135 |
| Laminat 6 | 135 |
| Laminat 7 | 152 |
| Laminat 8 | 151 |
| Laminat 9 | 82 |

### Beispiel 7

### Unverstärkte Reinharzgießharzplatten:

Die Reaktivharzlösung nach Beispiel 2 wurde in eine Plattenform gegossen. Die Aushärtung erfolgte analog zu den Härtungsbedingungen aus Beispiel 5. Die Platte wurde mittels Dynamisch-Mechanischer Analyse (DMA) und Cone-Kalorimetrie charakterisiert.

### Beispiel 10 und 11

### Unverstärkte, gefüllte Gießharzplatten:

Die Reaktivharzlösung nach Beispiel 2 wurde mit 150 Teilen bzw. 200 Teilen Aluminiumtrihydroxid gefüllt, mittels Dispergierscheibe vermischt und in eine Plattenform überführt. Die Aushärtung erfolgte analog zu den Härtungsbedingungen aus Beispiel 5. Die Platte wurde mittels DMA und Cone-Kalorimetrie charakterisiert.

## Patentansprüche

1. Ungesättigter Polyester, erhältlich aus oder unter Verwendung der folgenden Ausgangsmaterialien:
AₓB_{y}PS_{z}CₐPA1_{b}PA2_{c} (I)
mit
A = ungesättigte Carbonsäure mit mindestens zwei Carboxyfunktionen
B = gesättigte Carbonsäure mit mindestens zwei Carboxyfunktionen
PS = ein Phosphinoxid mit einer über Kohlenstoff am Phosphor gebundenen Kohlenwasserstoffgruppe, die mindestens zwei Carbonsäuregruppen trägt,
C = Alkohol-Komponente, enthaltend eine oder mehrere Verbindungen, die mindestens zwei Hydroxygruppen aufweisen,
PA1 = ein Phosphinoxid mit zwei über Kohlenstoff am Phosphor gebundenen Kohlenwasserstoffgruppen, die jeweils mindestens eine Hydroxygruppe tragen,
PA2 = ein Phosphinoxid mit einer über Kohlenstoff am Phosphor gebundenen Kohlenwasserstoffgruppe, die mindestens zwei Hydroxygruppen trägt, und zwei Substituenten, die entweder über Kohlenstoff oder über eine Sauerstoffbrücke am Phosphor gebunden sind,
x = >0 bis 1
y = 0 bis <1
z = 0 bis 0,6
x + y + z= 1
a = 0 bis 0,8
b = 0,1 bis 0,6,
c = 0 bis 0,6,
z + c = 0,1 bis 0,6,
wobei die Summe der Hydroxygruppen von C, PA1 und PA2 genau oder bis zu einer Abweichung von 50 % nach oben oder nach unten der Summe der Carbonsäuregruppen der Säurekomponente aus A, B entspricht.

2. Ungesättigter Polyester nach Anspruch 1, worin die über Kohlenstoff am Phosphor gebundenen Kohlenwasserstoffgruppen des Phosphinoxids PA1, die jeweils mindestens eine Hydroxygruppe tragen, ausgewählt sind unter geradkettigen, verzweigten oder cyclischen Alkyl- und Alkenylgruppen sowie Aryl- oder Aralkylgruppen, wobei der dritte Substituent am Phosphoratom ebenfalls eine über Kohlenstoff an das Phosphoratom gebundene Kohlenwasserstoffgruppe ist, ausgewählt unter geradkettigen, verzweigten oder cyclischen Alkyl- und Alkenylgruppen sowie Aryl- und Aralkylgruppen.

3. Ungesättigter Polyester nach Anspruch 2, worin das Phospinoxid PA1 ein Bis-(3-hydroxyalkyl)alkylphosphinoxid ist, dessen Alkylgruppen vorzugsweise 3 oder 4 Kohlenstoffatome aufweisen.

4. Ungesättigter Polyester nach einem der voranstehenden Ansprüche, worin der mindestens zwei Carbonsäuregruppen tragende Kohlenwasserstoffrest des Phosphinoxids PS und/oder der mindestens zwei Hydroxygruppen tragende Kohlenwasserstoffrest des Phosphinoxids PA2 durch mindestens eine Kupplungsgruppe, ausgewählt unter C(O)O, NHC(O), C(O)NH, NHC(O)NH oder deren Schwefel-Analoga, und/oder durch mindestens ein Heteroatom oder eine Heterogruppe, ausgewählt unter O, S und NH, unterbrochen ist.

5. Ungesättigter Polyester nach Anspruch 4, worin einer der beiden restlichen Substituenten am Phosphoratom eine über Kohlenstoff an das Phosphoratom gebundene Kohlenwasserstoffgruppe ist, ausgewählt unter geradkettigen, verzweigten oder cyclischen Alkyl und Alkenylgruppen sowie Aryl- und Aralkylgruppen, und worin der andere der beiden restlichen Substituenten am Phosphoratom ein über Sauerstoff gebundener Kohlenwasserstoffrest ist.

6. Ungesättigter Polyester nach Anspruch 5, worin das Phosphinoxid PS und/oder das Phosphinoxid PA2 ein Derivat von 1:9,10-Dihydro-9-oxa-10-phosphaphenanthren-10-oxid (DOPO) ist, das durch Umsetzung einer C=C-doppelbindungshaltigen Verbindung mit dem phosphorgebundenen Wasserstoff des DOPO erhalten wurde, und vorzugsweise eine 3-(1:9,10-Dihydro-9-oxa-10-phosphaphenanthren-10-oxid)alkandicarbonsäure, vorzugsweise die entsprechende Propandicarbonsäure, und/oder ein Diolester davon ist.

7. Ungesättigter Polyester nach einem der voranstehenden Ansprüche, weiterhin enthaltend einen Inhibitor zum Schutz der Doppelbindungen während der Polykondensation, vorzugsweise Hydrochinon.

8. Ungesättigtes Polyesterharz, umfassend
a. einen ungesättigten Polyester nach einem der voranstehenden Ansprüche,
b. mindestens eine Verbindung mit mindestens einer C=C-Doppelbindung oder einem Hetero-Ring, die/der unter dem Einfluss von Wärme, Licht oder ionisierender Strahlung in ein Kettenpolymer übergehen kann, sowie
c. gegebenenfalls eine Verbindung mit einer C=C-Doppelbindung, die unter dem Einfluss von Wärme, Licht oder ionisierender Strahlung ausschließlich radikalisch in ein entstehendes Kettenpolymer einbaubar ist und zusätzlich eine Phosphin- oder Phosphonsäure- oder Phosphin- oder Phosphonester-Gruppe aufweist.

9. Ungesättigtes Polyesterharz nach Anspruch 8, worin die unter b. genannte Verbindung Styrol oder eine Mischung aus Styrol und einem Acrylester oder Methacrylester, insbesondere Methylmethacrylat ist, wobei das Masseverhältnis von Styrol zu Acrylester oder Methacrylester vorzugsweise im Bereich von 10:1 bis 1:1, stärker bevorzugt von 8:1 bis 2:1 liegt und/oder worin die unter c. genannte Verbindung Vinylphosphonsäuredimethylester ist.

10. Ungesättigtes Polyesterharz nach einem der Ansprüche 8 und 9, worin der ungesättigte Polyester und die unter b. genannte(n) Verbindung(en) im Masseverhältnis von 20:80 bis 60:40, vorzugsweise von 70:30 bis 50:50, eingesetzt werden und worin das Harz 0 bis 10, vorzugsweise 0 bis 5 Masse-% der unter c. genannten Verbindung, 0 bis 3 Masse-% eines Härtungsbeschleunigers und 0 bis 5 Masse-% eines Härtungsinitiators, jeweils bezogen auf die Gesamtmenge des Harzes, aufweist.

11. Ungesättigtes Polyesterharz nach einem der Ansprüche 8 bis 10, zusätzlich umfassend einen vorzugsweise anorganischen oder mineralischen Füllstoff mit Brandschutzeigenschaften.

12. Ungesättigtes Polyesterharz nach Anspruch 11, worin als Füllstoff Aluminiumtrihydroxid verwendet wird, vorzugsweise in einer Menge von 80 bis 200 Masseteilen, bezogen auf die Masse des Harzes, wie in den Ansprüchen 8 bis 11 definiert.

13. Ungesättigtes Polyesterharz, nach einem der Ansprüche 8 bis 12, das mit einem Verstärkungsmaterial versehen ist, wobei das Verstärkungsmaterial vorzugsweise in Form von Fasern, insbesondere als Fasermatte, vorliegt, die mit dem ungesättigten Polyesterharz imprägniert, getränkt oder beschichtet sind/ist.

14. Ungesättigtes Polyesterharz nach Anspruch 13, worin die Fasern ausgewählt sind unter Glasfasern, Kohlefasern, keramischen Fasern und Mineralfasern.

15. Formkörper, bestehend aus oder umfassend ein Duromer, das durch Härtung des Polyesterharzes nach einem der Ansprüche 8 bis 13 erhalten wurde.

## Claims

1. An unsaturated polyester, obtainable from or using the following starting materials:
AₓB_{y}PS_{z}CₐPA1_{b}PA2_{c} (I)
wherein
A = unsaturated carboxylic acid having at least two carboxyl functional groups
B = unsaturated carboxylic acid having at least two carboxyl functional groups
PS = a phosphine oxide having a hydrocarbon group comprising at least two carboxylic acid groups and linked to the phosphorus via carbon,
C = alcohol component, comprising one or more compounds having at least two hydroxyl groups,
PA1 = a phosphine oxide having two hydrocarbon groups each linked to the phosphorus via carbon and each comprising at least one hydroxyl group,
PA2 = a phosphine oxide having a hydrocarbon group linked to the phosphorus via carbon and comprising at least two hydroxyl groups, and two substituents which are linked to the phosphorus either via carbon or via an oxygen bridge,
x = >0 to 1
y = 0 to <1
z = 0 to 0.6
x + y + z = 1
a = 0 to 0.8
b = 0.1 to 0.6,
c = 0 to 0.6,
z + c = 0.1 to 0.6,
wherein the sum of the hydroxyl groups of C, PA1 and PA2 corresponds exactly to the sum of the carboxylic acid groups and the acid component of A, B or allow a variation of up to 50% downwards and upwards.

2. The unsaturated polyester according to claim 1, wherein the hydrocarbon groups of the phosphine oxide PA1 which are linked to the phosphorus via carbon and which each comprises at least one hydroxyl group are selected from straight-chain, branched-chain or cyclic alkyl groups and alkenyl groups as well as aryl groups or aralkyl groups, wherein the third substituent at the phosphor atom is also a hydrocarbon group linked to the phosphor atom via carbon selected from straight-chain, branched-chain or cyclic alkyl groups and alkenyl groups as well as aryl groups or aralkyl groups.

3. The unsaturated polyester according to claim 2, wherein the phosphine oxide PA1 is a bis-(3-hydroxyalkyl)alkylphosphine oxide, the alkyl groups thereof preferably comprising 3 or 4 carbon atoms.

4. An unsaturated polyester according to one of the preceding claims, wherein the hydrocarbon residue comprising at least two carboxylic acid groups of the phosphine oxide PS and/or the hydrocarbon residue comprising at least two hydroxyl groups of the phosphine oxide PA2 is interrupted by at least one coupling group selected from C(O)O, NHC(O), C(O)NH, NHC(O)NH or the sulfur analogues thereof, and/or by at least one hetero atom or hetero group selected from O, S and NH.

5. The unsaturated polyester according to claim 4, wherein one of the two remaining residues at the phosphor atom is a hydrocarbon group linked to the phosphor atom via carbon, selected from straight-chain, branched-chain or cyclic alkyl groups and alkenyl groups as well as aryl groups or aralkyl groups, and wherein the other one of the two remaining residues is a hydrocarbon residue linked to the phosphor atom via oxygen.

6. The unsaturated polyester according to claim 5, wherein das phosphine oxide PS and/or the phosphine oxide PA2 is a derivative of 1:9,10-dihydro-9-oxa-10-phosphaphenanthrene-10-oxide (DOPO) obtained by reacting a C=C-double bond-containing compound with the phosphorus-bound hydrogen of the DOPO, and preferably a 3-(1:9,10-dihydro-9-oxa-10-phosphaphenanthrene-10-oxide)alkane dicarboxylic acid, preferably the corresponding propane dioic acid, and/or a diol ester thereof.

7. An unsaturated polyester according to one of the preceding claims, further comprising an inhibitor for protecting the double bonds during the polycondensation, preferably hydroquinone.

8. An unsaturated polyester resin, comprising
a. an unsaturated polyester according to one of the preceding claims,
b. at least one compound comprising at least one C=C double bond or a hetero ring, which can be converted to a chain polymer under the effect of heat, light or ionizing radiation, and
c. optionally a compound having a C=C double bond which can be inserted only radically into a forming chain polymer formed under the effect of heat, light or ionizing radiation and additionally comprises a phosphine group or phosphonic acid group or phosphine ester group or phosphonic ester group.

9. The unsaturated polyester according to claim 8, wherein compound referred to in item b. is styrene or a blend of styrene and an acrylic ester or methacrylic ester, in particular methylmethacrylic ester, wherein the mass ratio of styrene to acrylic ester or methacrylic ester is preferably in the range of from 10:1 to 1:1, more preferably from 8:1 to 2:1, and/or wherein the compound referred to under item c. is vinyl phosphonic acid dimethylester.

10. The unsaturated polyester resin according to one of claims 8 and 9, wherein the unsaturated polyester and the compound(s) referred to in item b. are used in a mass ratio of 20:80 to 60:40, preferably from 70:30 to 50:50, and wherein the resin comprises 0 to 10, preferably 0 to 5 mass-% of the compound referred to in item c., 0 to 3 mass-% of a curing accelerator and 0 to 5 mass-% of a curing initiator, each with respect to the total amount of the resin.

11. An unsaturated polyester resin according to one of the claims 8 to 10, further comprising a filler having fire protection properties, which is preferably inorganic or mineral.

12. The unsaturated polyester resin according to claim 11, wherein aluminium trihydroxide is used as the filler, preferably in an amount of 80 to 200 parts by mass with respect to the mass of the resin, as defined in claims 8 to 11.

13. An unsaturated polyester resin according to one of the claims 8 to 12, provided with a reinforcing material, wherein the reinforcing material preferably is in the form of fibers, in particular as a fiber mat which is/are impregnated, soaked or coated with the unsaturated polyester resin.

14. The unsaturated polyester resin according to claim 13, wherein the fibers are selected from glass fibers, carbon fibers, ceramic fibers and mineral fibers.

15. A molded body consisting of or comprising a duromer obtained by curing the polyester resin according to one of the claims 8 to 13.

## Revendications

1. Polyester insaturé, pouvant être obtenu à partir de ou en utilisant les éléments de départ suivants:
AₓB_{y}PS_{z}CₐPA1_{b}PA2_{c} (I)
dans lequel
A = acide carboxylique insaturé ayant au moins deux fonctions carboxy,
B = acide carboxylique saturé ayant au moins deux fonctions carboxy,
PS = un oxyde phosphinique ayant un groupe hydrocarbure qui est lié au phosphore par du carbone et qui porte au moins deux groupes acide carboxylique,
C = composant alcool contenant un ou plusieurs composés, qui présentent au moins deux groupes hydroxy,
PA1 = un oxyde phosphinique ayant deux groupes hydrocarbure qui sont liés au phosphore par du carbone et qui portent respectivement au moins un groupe hydroxy,
PA2 = un oxyde phosphinique ayant un groupe hydrocarbure qui est lié au phosphore par du carbone et qui porte au moins deux groupes hydroxy, et deux substituants, qui sont liés au phosphore par du carbone ou par un pont oxygène,
x ≥ 0 à 1,
y = 0 à < 1,
z = 0 à 0,6,
x + y + z = 1,
a = 0 à 0,8,
b = 0,1 à 0,6,
c = 0 à 0,6,
z + c = 0,1 à 0,6,
dans lequel la somme des groupes hydroxy de C, PA1 et PA2 correspond exactement ou avec un écart maximum de 50 % vers le haut ou vers le bas à la somme des groupes acide carboxylique des composants acide de A, B.

2. Polyester insaturé selon la revendication 1, dans lequel les groupes hydrocarbure de l'oxyde phosphinique PA1 liés au phosphore par du carbone, qui portent respectivement au moins un groupe hydroxy, sont choisis parmi des groupes alkyle et alcényle ainsi que des groupes aryle ou aralkyle à chaîne droite, ramifiés ou cycliques, dans lequel le troisième substituant à l'atome de phosphore est également un groupe hydrocarbure lié à l'atome de phosphore par du carbone, choisi parmi des groupes alkyle et alcényle ainsi que des groupes aryle et aralkyle à chaîne droite, ramifiés ou cycliques.

3. Polyester insaturé selon la revendication 2, dans lequel l'oxyde phosphinique PA1 est un oxyde bis-(3-hydroxyalkyl)alkylphosphinique, dont les groupes alkyle présentent de préférence 3 ou 4 atomes de carbone.

4. Polyester insaturé selon l'une quelconque des revendications précédentes, dans lequel le radical hydrocarbure de l'oxyde phosphinique PS portant au moins deux groupes acide carboxylique et/ou le radical hydrocarbure de l'oxyde phosphinique PA2 portant au moins deux groupes hydroxy est interrompu par au moins un groupe de couplage, choisi parmi C(O)O, NHC(O), C(O)NH, NHC(O)NH ou leurs analogues sulfurés, et/ou par au moins un hétéroatome ou un hétéro-groupe, choisi parmi O, S et NH.

5. Polyester insaturé selon la revendication 4, dans lequel un des deux substituants restants à l'atome de phosphore est un groupe hydrocarbure lié à l'atome de phosphore par du carbone, choisi parmi des groupes alkyle et alcényle ainsi que des groupes aryle et aralkyle à chaîne droite, ramifiés ou cycliques, et dans lequel l'autre des deux substituants restants à l'atome de phosphore est un radical hydrocarbure lié par de l'oxygène.

6. Polyester insaturé selon la revendication 5, dans lequel l'oxyde phosphinique PS et/ou l'oxyde phosphinique PA2 est un dérivé de l'oxyde 1:9,10-dihydro-9-oxa-10-phosphaphénanthrène-10 (DOPO), qui a été obtenu par conversion d'un composé ayant une double liaison C=C avec l'hydrogène lié au phosphore du DOPO, et est de préférence un acide 3-(1:9,10-dihydro-9-oxa-10-phosphaphénanthrène-10-oxyde)alcane dicarboxylique, de préférence l'acide propane dicarboxylique correspondant, et/ou un ester de diol.

7. Polyester insaturé selon l'une quelconque des revendications précédentes, contenant en outre un inhibiteur pour la protection des doubles liaisons pendant la polycondensation, de préférence de l'hydroquinone.

8. Résine de polyester insaturée, comprenant
a. un polyester insaturé selon l'une quelconque des revendications précédentes,
b. au moins un composé ayant au moins une double liaison C=C ou un hétérocycle, qui peut se transformer en une chaîne polymère sous l'influence de la chaleur, de la lumière ou d'un rayonnement ionisant, ainsi que
c. éventuellement un composé ayant une double liaison C=C, qui peut, sous l'influence de la chaleur, de la lumière ou d'un rayonnement ionisant, être intégré de manière exclusivement radicalaire dans une chaîne polymère formée et qui présente en plus un groupe acide phosphinique ou phosphonique ou ester phosphinique ou ester phosphonique.

9. Résine de polyester insaturée selon la revendication 8, dans laquelle le composé mentionné sous b. est du styrène ou un mélange de styrène et d'un ester acrylique ou ester méthacrylique, en particulier du méthacrylate de méthyle, dans laquelle le rapport massique du styrène à l'ester acrylique ou à l'ester méthacrylique se situe de préférence dans la plage de 10:1 à 1:1, de préférence encore de 8:1 à 2:1 et/ou dans laquelle le composé mentionné sous c. est l'ester diméthylique de l'acide vinylphosphonique.

10. Résine de polyester insaturée selon une des revendications 8 et 9, dans laquelle le polyester insaturé et le/les composé(s) mentionné(s) sous b. sont utilisés avec un rapport massique de 20:80 à 60:40, de préférence de 70:30 à 50:50, et dans laquelle la résine présente 0 à 10, de préférence 0 à 5 % en masse du composé mentionné sous c., 0 à 3 % en masse d'un accélérateur de prise et 0 à 5 % en masse d'un initiateur de prise, rapportés respectivement à la quantité totale de la résine.

11. Résine de polyester insaturée selon l'une quelconque des revendications 8 à 10, comprenant en outre une charge de préférence inorganique ou minérale avec des propriétés de protection contre l'incendie.

12. Résine de polyester insaturée selon la revendication 11, dans laquelle on utilise comme charge du trihydroxyde d'aluminium, de préférence en une quantité de 80 à 200 parties en masse, rapportée à la masse de la résine, telle qu'elle est définie dans les revendications 8 à 11.

13. Résine de polyester insaturée selon l'une quelconque des revendications 8 à 12, qui est dotée d'un matériau de renforcement, dans laquelle le matériau de renforcement est présent de préférence sous forme de fibres, en particulier d'un tapis de fibres, qui est imprégné, enduit ou revêtu avec la résine de polyester insaturée.

14. Résine de polyester insaturée selon la revendication 13, dans laquelle les fibres sont choisies parmi des fibres de verre, des fibres de carbone, des fibres céramiques et des fibres minérales.

15. Corps moulé, se composant de ou comprenant un duromère, qui a été obtenu par prise de la résine de polyester selon l'une quelconque des revendications 8 à 13.
